# EUROPEAN PATENT SPECIFICATION

(11) **EP 1 658 203 B1**
(45) Date of publication and mention of the grant of the patent: **25.03.2009**
(21) Application number: 04757156.7
(22) Date of filing: 21.07.2004
(51) Int. Cl.: B60R 21/20

(54) **PASSENGER AIRBAG MODULE WITH COVER COUPLING MECHANISM**
BEIFAHRERAIRBAGMODUL MIT ABDECKUNGSKUPPLUNGSMECHANISMUS
MODULE D'AIRBAG PASSAGER COMPRENANT UN MECANISME DE COUPLAGE DE COUVERCLE

(30) Priority: 29.08.2003 US 499233 P; 30.06.2004 US 881512
(43) Date of publication of application: 24.05.2006
(73) Proprietor: KEY SAFETY SYSTEMS, INC., Sterling Heights, MI 48314 (US)
(72) Inventor: THOMAS, David, E., North Branch, MI 48461 (US)
(74) Representative: Gislon, Gabriele
(86) International application number: PCT/US2004/023296
(87) International publication number: WO 2005/023589

(56) References cited:
- JP-A- 2000 301 996
- US-A- 4 842 300
- US-A- 5 127 669
- US-A- 5 217 253
- US-A- 5 297 813
- US-A- 5 419 583
- US-A- 5 876 058
- US-A- 5 887 891
- US-A- 5 887 891

## Description

The present invention relates to a passenger airbag module having an airbag cover coupling mechanism that improves fit and finish characteristics of the airbag cover when the cover is coupled to a vehicle's instrument panel.

Passenger airbag modules are typically mounted within the instrument panel of a vehicle. A typical passenger airbag module includes a housing, which facilitates the mounting of the passenger airbag module to the vehicle and provides a reaction surface for deployment forces, a single or dual stage inflator mounted to the housing, an airbag, and a cover. The prior art teaches a wide variety of methods to couple the airbag module to the instrument panel or dashboard. Typically, the backside of a passenger airbag module is coupled to a vehicle's cross-car beam using a depending flange. While cross-car beam provides a very stable platform for absorbing reaction forces of the deploying airbag, its relative location within a vehicle often changes due to standard manufacturing tolerances. The use of a vehicle's cross-car beam as a positional reference point often leads to poor fit and finish characteristics of the airbag cover with respect to the instrument panel.

Other systems have attempted to alleviate this problem by incorporating an airbag cover directly into an instrument panel. Unfortunately, after a deployment of the airbag, such systems require the replacement of the entire instrument panel or support surface. This significantly increases the cost and complexity of repairing the vehicle after an airbag deployment event.

US 5419583 discloses an air-bag module according to the preamble of claim 1 installed in a housing in a dashboard or instrument panel space and an air bag lid that opens when the air bag is inflated. The module is connected to the lid by means of a hinge and connection members. The lid comprises a main lid portion and a cover portion of hollow plastic that cooperates with the lid and with a plate to absorb energy in case of impact of the passenger.

A passenger airbag module according to the present invention has a housing, an inflator, and an airbag. Coupled to the housing is a cover, which has a plurality of coupling members, which interface with a plurality of apertures defined within the instrument panel. The cover is coupled to the housing using a bracket having a generally C-shaped cross-section. The C-shaped bracket is coupled to a plurality of retaining flanges, which are disposed on the housing. The C-shaped bracket has a plurality of cover flange engaging members, which are disposed through a plurality of slots defined in the cover to interface with an exterior surface of the housing and which provide for relative movement of the cover and housing.
Figure 1 is an exploded perspective view of an airbag module according to the present invention.
Figure 2 is a cross-sectional side view of the airbag module of Figure 1 disposed within an instrument panel.
Figure 3 is an expanded view of the cover coupling mechanism shown in Figure 2.
Figure 4 is a sectional perspective view of the housing shown in Figure 1.
Figure 5 is a top view of the cover shown in Figure 1.
Figure 6 is a perspective view of the first and second retaining brackets shown in Figure 1.
Figures 7 and 8 are views of the module shown in Figure 1 during its manufacture.

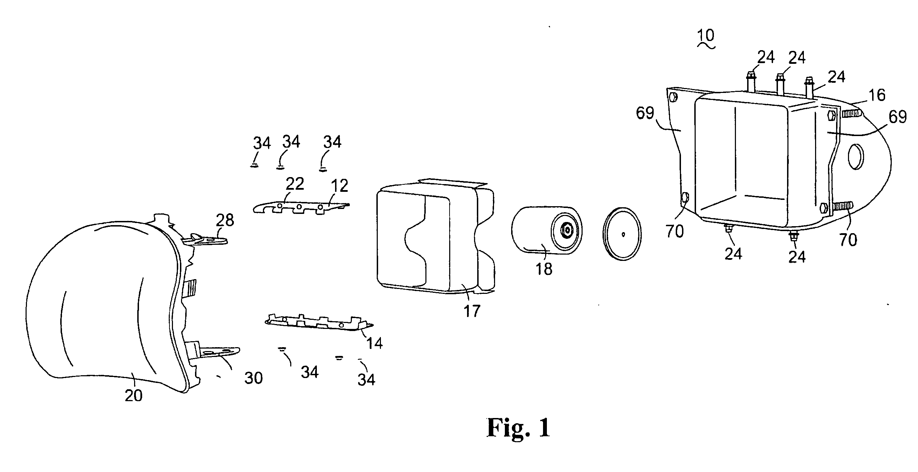

Figure 1 is an exploded perspective view of the module 10 utilizing fixation brackets 12, 14 according to the present invention. The module 10 has a housing 16, a chute 17, a cushion pack comprising the airbag (not shown), an inflator 18, and a cover 20. The inflator 18 has first and optional second sources of gas of known types to provide inflation gases to the cushion pack in a staged or sequenced manner to inflate the cushion. The cover 20 is slidably attached to the housing 16 by the fixation brackets 12, 14.

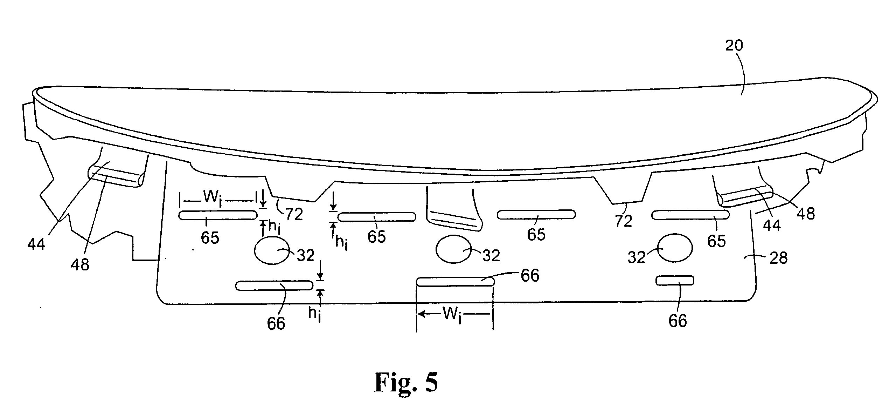

The first fixation bracket 12 has a plurality of apertures 22, which mate with a corresponding plurality of studs 24 extending from an exterior surface 26 of the housing 16. The cover 20 has a pair of depending flanges 28, 30. Each flange 28, 30 defines a plurality of corresponding apertures 32 (see Figure 5) which aligns with a corresponding aperture 22 of one of the fixation brackets 12, 14. Each stud 24 of the housing 16 extends through a corresponding aperture 32. The brackets 12, 14 are coupled to the studs 24 using a plurality of threaded fasteners 34. While the studs 24 are shown extending from the sides of the housing 16, the studs can be inserted through brackets 12, 14 and flanges 28, 30 and received within threaded openings in the sides of the housing.

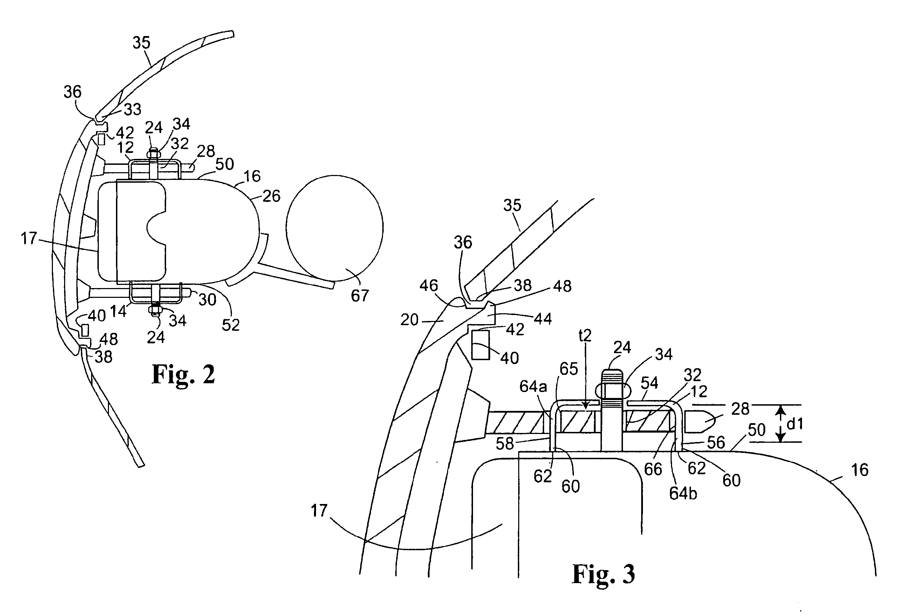

Figure 2 is a cross-sectional side view of the module 10 disposed within an instrument panel 35. The instrument panel 35 defines a first aperture 36, which has a periphery 38 thereabout. Disposed adjacent to the periphery is at least one retaining surface 40, which defines a plurality of retaining apertures 42. The retaining apertures 42 accept a plurality of retaining tabs or flanges or hooks 44, which are positioned about the periphery 46 of the cover 20. The periphery 46 (noted in Figure 3) of the cover 20 generally corresponds to the periphery 38 of the first aperture 36 in the instrument panel 35. Each retaining flange 44 of the cover 20 has a corresponding mating tooth or enlarged end 48, which optionally functions to releasably lock the retaining flange 44 into the retaining aperture 42 of the instrument panel 35. In the preferred embodiment each retaining flange 44 is flexibly connected to the cover and is an integral part therewith.

The depending flanges 28, 30 are generally parallel to one another and will align with a corresponding a pair of generally parallel surfaces 50, 52 on the exterior surface 26 of the housing 16.

In Figure 3 the fixation brackets 12, 14 are generally C-shaped (or U-shaped) having a base 54 and a depending side or side flanges 56, 58. The proximal end 60 of the depending side flanges 56, 58 forms a coupling or engagement surface 62, which generally engages a surface 50 of the exterior surface of the module. Each bracket 12, 14 may include depending end flanges such as 57, 59. The end flanges 57, 59 provide each bracket 12, 14 with greater rigidity, preventing the bracket from being bent inwardly when fastener 34 is tightened.

In the preferred embodiment the depending side flanges 56, 58 of fixation flange 12, 14 are segmented to form a plurality of cover flange engagement members 64a, 64b. The cover flange engagement members 64a of the first flange 56 are positioned so that they are not aligned with the cover engagement members 64b of the second depending side flange 58. The engagement members of each depending flange 56, 58 are disposed to be able to extend through a corresponding slot 65, 66 defined within the cover depending flanges 28, 30.

In Figures 3 and 5, the thickness, t_{I}, of each engagement member 64a, 64b is smaller than the height, h_{I}, of a corresponding slot 65, 66 (into which the engagement member is received) thereby permitting the relative vertical up-and-down motion of the housing 16 relative to the cover 30. The thickness of each engagement member can be the same or can differ; similarly the height of each groove can be the same or can differ. The width w_{I}, of each engagement member is narrower than the width, W_{I} of a corresponding groove 65 or 66, allowing for the side-to-side (or left-to-right) relative movement of the housing and the cover. The depth, d1, of the depending side flanges 56, 58 of the fixation flanges 12, 14 is deeper than the thickness,t2, of the flanges 28, 30. This allows relative front-to-back motion of the housing 16 with respect to the cover 20 and to the cross-car beam 67. The slots 65, 66 of each bracket 12, 14, as well as the apertures 32 of the cover flanges, are oversized relative to each fastener 24 to allow horizontal and vertical movement of the housing 16 with respect to the cover 20, with the cover fixed on the instrument panel or in a preferred location thereon.

The construction of the module 10 allows the airbag cover 20 to mate with the instrument panel 34 while permitting the module's housing 16 to float with respect to the cover 20. In this way, with the cover in alignment with the instrument panel, the housing 16 can be moved along three perpendicular axes relative to the cover 20 and to the vehicle fixation points such as the vehicle's cross-car beam 67, and then secured to the fixation points.

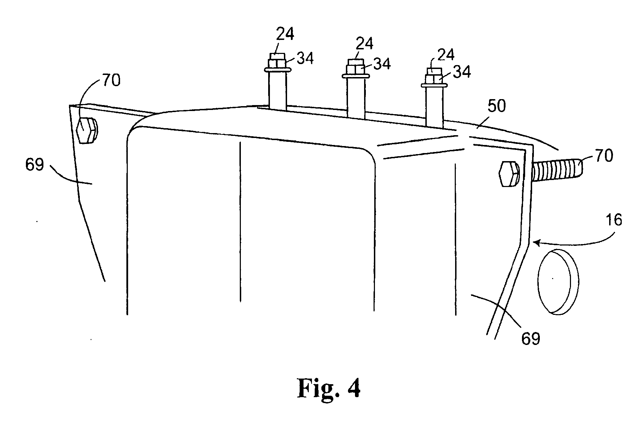

Figure 4 shows the housing of Figure 1. The housing may be formed of cast or stamped metals or, alternatively, by reinforced composites. Coupled to the housing is the plurality of fixation flanges 69. These flanges are optionally threaded studs 24 used to couple the cover 20 to the housing 16. A pair of threaded fasteners 70 are used to mount the housing 16 to an interior surface of the instrument panel 35.

Figure 5 is a top view of the cover 20. The depending flange 28 has a plurality of apertures 32, which mate with the studs 24 of the housing 16. The diameter of each aperture 32 is significantly larger than the diameter of a corresponding stud 24. Further shown is the configuration of the slots 65, 66 of the depending flange 28. The rows of slots 65, 66 are staggered to correspond to the cover flange engagement members 64a, 64b of the fixation brackets 12, 14. Disposed about the periphery 46 of the cover 20 are the cover retaining flanges 44, which snap to the instrument panel about opening 36. A plurality of stop flanges 72 prevent the cover 20 from being pushed into the instrument panel 35.

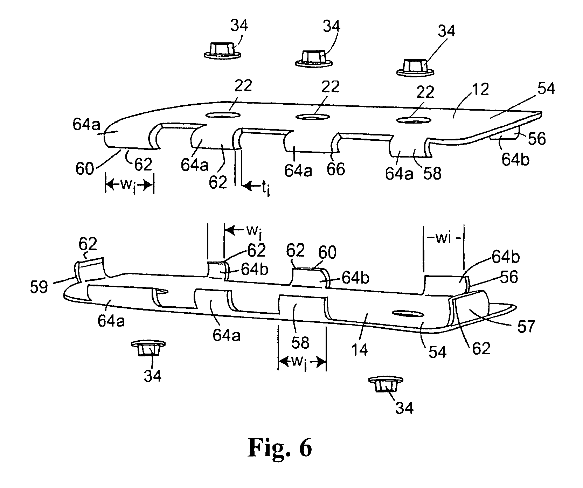

Figure 6 is a perspective view of the fixation brackets 12 and14. Shown is the base member 54 and depending side flanges 56, 58. The depending side flanges 56, 58 are segmented to form sets of cover flange engagement members 64a, 64b. It is envisioned that these cover flange engagement members 64a, 64b can extend from the base member 54 in either a straight or curved manner (as is shown).

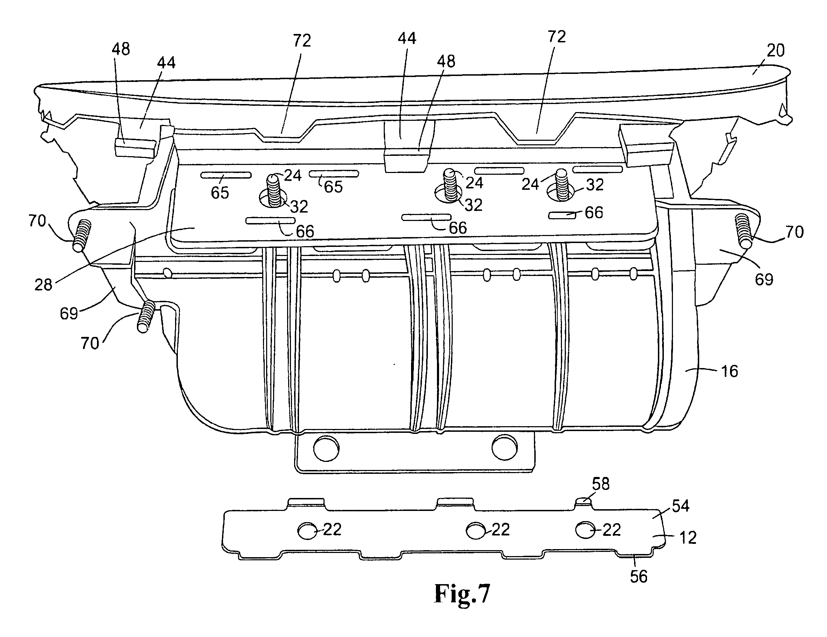

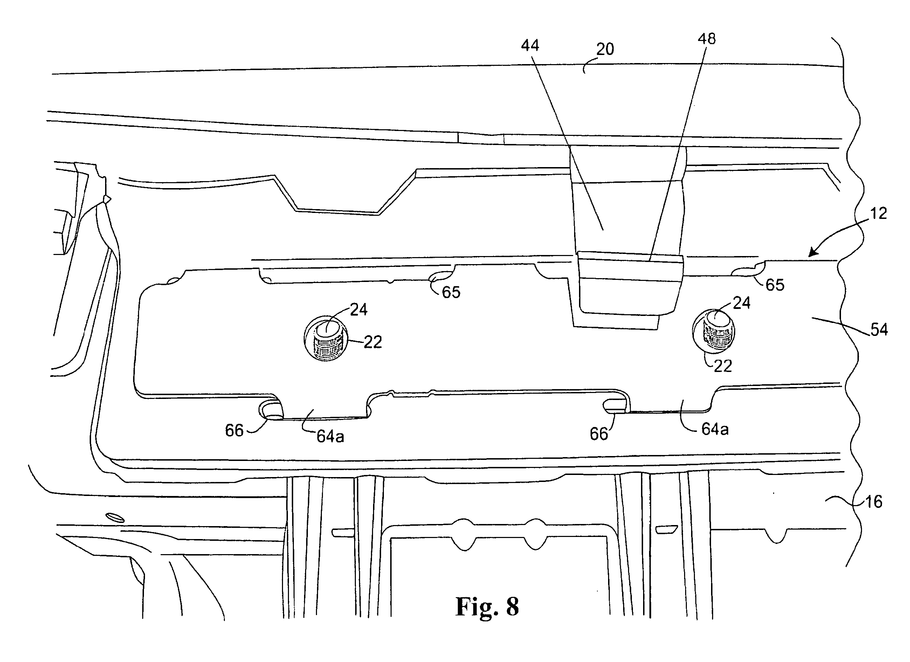

Figures 7 and 8 show steps in the manufacturing of the module 10 according to the present invention are shown. Prior to coupling the cover 20 to the housing 16, the cushion pack and inflator are disposed and fixed to or placed within the housing 16. The depending flanges 28, 30 are rotated away from each other to allow the apertures 32 of the depending flanges 28, 30 to be positioned over the studs 22 of the housing 16. In Figure 8, the fixation bracket 12 is subsequently placed over the cover 20 and depending flange 28 to allow the apertures 22 of the fixation bracket 12 to be positioned over the studs 24 and the engagement members 64a, 64b through grooves 65, 66.

The length of the slots 65, 66 of the cover 20 depending flange 28 is longer than the length of the corresponding flange engagement members 64a, 64b. The aperture 22 defined in fixation bracket 12 has a diameter significantly larger than the diameter of the stud 24 and sufficient not to block the relative movement between the cover and brackets 12, 14. The combination of the extended slots 65, 66 in the cover flange 28, as well as the size of the aperture 22 and the apertures 32 formed in the cover flange 28 and bracket 12, allows relative transverse movement of the housing 16 with respect to the cover 20.

## Claims

1. An airbag module (10) comprising:
a housing (16) having a plurality of cover retaining features (24);
a cover (20) having a pair of depending cover flanges (28, 30), at least one of the cover flanges defining a first set of apertures configured to be disposed over a corresponding cover retaining feature (24);
a retaining bracket, generally C-shaped or U-shaped in cross-section, having a plurality of cover retaining members (64a, 64b) and a plurality of apertures (22) configured to be disposed over the cover retaining features (24) of the housing (16); wherein the apertures (22) are configured to be disposed over the cover retaining features when the cover retaining members extend through slots (66) in the depending cover flanges (28, 30); **characterized by** said depending cover flanges (28, 30) of said cover (20) defining each a pair of rows of slots (66, 65).

2. An airbag module (10) according to Claim 1 wherein the cover retaining features (24) are threaded studs.

3. An airbag module (10) according to either of Claims 1 or 2 wherein corresponding slots (66, 65) in each of the pairs of rows of slots are offset with respect to each other.

4. An airbag module (10) according to any of claims 1 - 3 wherein the retaining bracket comprises a pair of rows of cover retaining members (64a, 64b).

5. An airbag module (10) according to Claim 4 wherein the pair of rows of cover retaining members (64a, 64b) are offset.

6. An airbag module (10) according to any of Claims 1 - 5 wherein the cover retaining members (64a, 64b) define a coupling surface (62) that interfaces with the housing (16).

7. An airbag module (10) according to any of Claims 1 - 6 wherein the slots (65, 66) and apertures (32) have a size that allows relative movement of the cover (20) with respect to the housing (16).

## Patentansprüche

1. Airbagmodul (10), das Folgendes umfasst:
ein Gehäuse (16), das mehrere Abdeckungsfesthaltemerkmale (24) hat,
eine Abdeckung (20), die ein Paar von herabhängenden Abdeckungsflanschen (28, 30) hat, wobei wenigstens einer der Abdeckungsflansche einen ersten Satz von Öffnungen definiert, die dafür konfiguriert sind, über einem entsprechenden Abdeckungsfesthaltemerkmal (24) angeordnet zu sein,
eine, im Allgemeinen im Querschnitt C-förmige oder U-förmige, Festhalteklammer, die mehrere Abdeckungsfesthalteelemente (64a, 64b) und mehrere Öffnungen (22) hat, die dafür konfiguriert sind, über den Abdeckungsfesthaltemerkmalen (24) des Gehäuses (16) angeordnet zu sein, wobei die Öffnungen (22) dafür konfiguriert sind, über den Abdeckungsfesthaltemerkmalen angeordnet zu sein, wenn sich die Abdeckungsfesthalteelemente durch die Schlitze (66) in den herabhängenden Abdeckungsflanschen (28, 30) erstrecken, **dadurch gekennzeichnet, dass** die herabhängenden Abdeckungsflansche (28, 30) der Abdeckung (20) jeweils ein Paar von Reihen von Schlitzen (66, 65) definieren.

2. Airbagmodul (10) nach Anspruch 1, wobei die Abdeckungsfesthaltemerkmale (24) Gewindebolzen sind.

3. Airbagmodul (10) nach einem der Ansprüche 1 oder 2, wobei die entsprechenden Schlitze (66, 65) in jedem der Paare von Reihen von Schlitzen in Bezug auf einander versetzt sind.

4. Airbagmodul (10) nach einem der Ansprüche 1 bis 3, wobei die Festhalteklammer ein Paar von Reihen von Abdeckungsfesthalteelementen (64a, 64b) umfasst.

5. Airbagmodul (10) nach Anspruch 4, wobei das Paar von Reihen von Abdeckungsfesthalteelementen (64a, 64b) versetzt ist.

6. Airbagmodul (10) nach einem der Ansprüche 1 bis 5, wobei die Abdeckungsfesthalteelemente (64a, 64b) eine Kupplungsfläche (62) definieren, die sich mit dem Gehäuse (16) verbindet.

7. Airbagmodul (10) nach einem der Ansprüche 1 bis 6, wobei die Schlitze (65, 66) und die Öffnungen (32) eine Größe haben, die eine relative Bewegung der Abdeckung (20) in Bezug auf das Gehäuse (16) ermöglicht.

## Revendications

1. Module de coussin gonflable (10), comprenant:
un boîtier (16) comportant une pluralité d'unités de retenue de couvercle (24);
un couvercle (20) comportant une paire de brides de couvercle dépendant (28; 30), au moins une des brides de couvercle définissant une première série d'ouvertures configurées pour être disposées au-dessus d'une unité de retenue de couvercle correspondante (24);
un support de fixation, généralement en forme de C ou de U en section transversale, comportant une pluralité d'éléments de retenue de couvercle (64a; 64b) et une pluralité d'ouvertures (22) configurées pour être disposées au-dessus des unités de retenue de couvercle (24) du boîtier (16); dans lequel les ouvertures (22) sont configurées pour être disposées au-dessus des unités de retenue du couvercle quand les éléments de retenue de couvercle s'étendent à travers les fentes (66) dans les brides de couvercle dépendant (28, 30); **caractérisé en ce que** lesdites brides de couvercle dépendant (28; 30) dudit couvercle (20) définissent chacune une paire de rangées de fentes (66; 65).

2. Module de coussin gonflable (10) selon la revendication 1, dans lequel les unités de retenue du couvercle (24) sont des goujons filetés.

3. Module de coussin gonflable (10) selon l'une quelconque des revendications 1 et 2, dans lequel les fentes correspondantes (66, 65) dans chacune des paires de rangées de fentes sont décalées l'une par rapport à l'autre.

4. Module de coussin gonflable (10) selon l'une quelconque des revendications 1 à 3, dans lequel le support de fixation comprend une paire de rangées d'éléments de retenue de couvercle (64a, 64b).

5. Module de coussin gonflable (10) selon la revendication 4, dans lequel la paire de rangées d'éléments de retenue de couvercle (64a, 64b) sont décalées.

6. Module de coussin gonflable (10) selon l'une quelconque des revendications 1 à 5, dans lequel les éléments de retenue de couvercle (64a, 64b) définissent une surface de couplage (62) qui coopère avec le boîtier (16).

7. Module de coussin gonflable (10) selon l'une quelconque des revendications 1 à 6, dans lequel les fentes (65, 66) et les ouvertures (32) ont une taille permettant un mouvement relatif du couvercle (20) par rapport au boîtier (16).
